# EUROPEAN PATENT SPECIFICATION

(11) **EP 2 975 580 B1**
(45) Date of publication and mention of the grant of the patent: **26.06.2019**
(21) Application number: 15159379.5
(22) Date of filing: 17.03.2015
(51) Int. Cl.: G06T 15/60, G06F 3/048

(54) **METHOD AND SYSTEM FOR PROVIDING VISUAL FEEDBACK IN A VIRTUAL REALITY ENVIRONMENT**
VERFAHREN UND SYSTEM ZUR BEREITSTELLUNG VISUELLER RÜCKKOPPLUNG IN EINER VIRTUELLEN REALITÄTSUMGEBUNG
PROCÉDÉ ET SYSTÈME PERMETTANT DE FOURNIR UNE RÉTROACTION VISUELLE DANS UN ENVIRONNEMENT DE RÉALITÉ VIRTUELLE

(30) Priority: 16.07.2014 IN CH34942014; 05.09.2014 US 201414478277
(43) Date of publication of application: 20.01.2016
(73) Proprietor: Wipro Limited, 560 035 Karnataka (IN)
(72) Inventor: Mukkamala, Sreenivasa Reddy, Andrapradesh (IN); Madhusudhanan, Manoj, 560098 Bangalore (IN)
(74) Representative: Finnegan Europe LLP

(56) References cited:
- US-A1- 2008 225 041
- US-A1- 2010 315 413
- US-A1- 2013 257 748
- Otmar Hilliges ET AL: "Interactions in the air: adding further depth to interactive tabletops", Proceedings of the 22Nd Annual ACM Symposium on User Interface Software and Technology, 7 October 2009 (2009-10-07), pages 139-148, XP055190199, Retrieved from the Internet: URL:http://dl.acm.org/citation.cfm?id=1622 203 [retrieved on 2015-05-19]
- AARON GENEST ET AL: "Evaluating the effectiveness of height visualizations for improving gestural communication at distributed tabletops", PROCEEDINGS OF THE ACM 2012 CONFERENCE ON COMPUTER SUPPORTED COOPERATIVE WORK, CSCW '12, 1 January 2012 (2012-01-01), page 519, XP055240421, New York, New York, USA DOI: 10.1145/2145204.2145285 ISBN: 978-1-4503-1086-4
- HASENFRATZ J-M ET AL: "A survey of real-time soft shadows algorithms", COMPUTER GRAPHICS FORUM, WILEY-BLACKWELL PUBLISHING LTD, GB, vol. 22, no. 4, 1 December 2003 (2003-12-01), pages 753-774, XP002502904, ISSN: 0167-7055, DOI: 10.1111/J.1467-8659.2003.00722.X

## Description

### Technical Field

This disclosure relates generally to providing feedback to a user and more particularly to a method and system for providing visual feedback to a user in a virtual reality environment.

### Background

In an immersive virtual environment, a viewer may perceive being physically present in a non-physical world. The perception may be created by surrounding the viewer with 3-dimensional images, sound and other stimuli that provide an "immersive" environment. Off-axis perspective projection techniques may use head tracking to calculate perspective view from the location of the viewer. Then, these inputs may be used for the perspective simulation of a camera in a virtual environment. This visual simulation puts the viewer in to an illusion that the viewer is surrounded by floating objects of the immersive virtual environment.

Some applications of an immersive virtual environment may require the viewer to interact with objects of the virtual environment. However, interaction between a real world object (the viewer) with an object in the virtual world may not be seamless. This may be due to lack of feedback to the user when approaching or interacting with objects of the virtual world. For example, if the virtual environment allows the viewer to grab a particular object and move it, the viewer may not be able to intuitively determine the grab action as the viewer is grabbing a virtual object and not a real object.

Interactive tabletops are described in Otmar Hilliges et al., "Interactions in the air: adding further depth to interactive tabletops", Proceedings of the 22nd Annual ACM Symposium on User Interface Software and Technology, 4- 7 October 2009. A shadow is cast of a virtual object and a user's hand on to a table top to show an interaction with the virtual object.

Although different to the present disclosure, US2008/0225041 describes a method and system for vision-based interaction in a virtual environment.
An overview of soft shadow algorithms is provided by J.-M. Hasenfratz et al. in "A survey of real-time soft shadows algorithms", Computer Graphics Forum, Vol. 22 (2003), number 4, pp. 753-774.

### SUMMARY

In accordance with the invention, there is provided: a method of providing visual feedback to a user in a virtual reality environment, as recited by claim 1; a system as recited by claim 7; and a non-transitory computer-readable medium as recited by claim 13.

A method of providing visual feedback to a user in a virtual reality environment is disclosed. The method comprises:
capturing position and depth information of the user using a depth sensor; determining a potential interaction point between the user and a 3D virtual object associated with the virtual reality environment based on the position and depth information of the user; determining, using a virtual depth camera, depth of the 3D virtual object at the potential interaction point; calculating a distance between the user and the 3D virtual object based on the position and depth information of the user and the depth of the 3D virtual object at the potential interaction point; and rendering a soft shadow of the user on the 3D virtual object based on the distance between the user and the 3D virtual object.

A system for providing visual feedback to a user in a virtual reality environment is disclosed. The system comprises a processor and a memory disposed in communication with the processor and storing processor-executable instructions. The instructions may comprise instructions to: receive position and depth information of the user from a depth sensor; determine a potential interaction point between the user and a 3D virtual object associated with the virtual reality environment based on the position and depth information of the user; receive depth of the 3D virtual object at the potential interaction point from a virtual depth camera; calculate a distance between the user and the 3D virtual object based on the position and depth information of the user and the depth of the 3D virtual object at the potential interaction point; and render a soft shadow of the user on the 3D virtual object based on the distance between the user and the 3D virtual object.

A non-transitory, computer-readable medium storing instructions that, when executed by a processor, causes the processor to perform operations to provide visual feedback to a user in a virtual reality environment using the above method of providing visual feedback is disclosed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates a block diagram of a method of providing visual feedback to a user in a virtual environment according to some embodiments of the present disclosure.
**FIG. 2** illustrates an exemplary depiction of a method of providing visual feedback to a user in accordance with some embodiments of the present disclosure.
**FIG. 3** illustrates a system for providing visual feedback to a user in a virtual reality environment in accordance with some embodiments of the present disclosure.
**FIG. 4** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

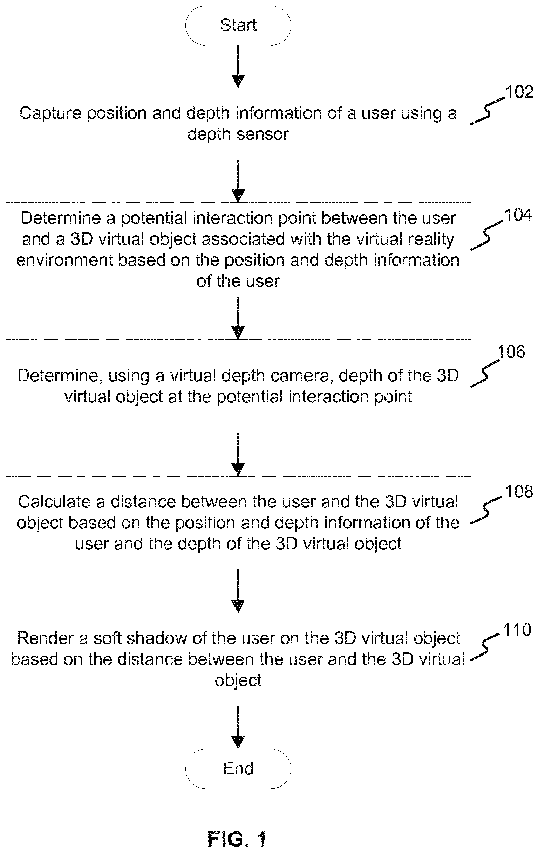

FIG. 1 illustrates a block diagram of a method of providing visual feedback to a user in a virtual environment according to some embodiments of the present disclosure. The virtual environment may be an immersive environment wherein the user may interact with objects displayed or projected on surfaces surrounding the user. An example of an immersive virtual environment could be Computer Assisted Virtual Environment (CAVE) where projectors may be directed to three, four, five, or six of the walls of a room. The projectors may project images on the different walls to give a user the perception of actually being present and involved in the virtual environment. The images projected on the different walls may give the user a perception of being surrounded by 3D objects that are floating around the user.

Immersive environments may track head or eye movements of the user and accordingly render a scene from the perspective of the user's head or eyes. For example, it may be possible for a user to walk around a 3D object rendered in the scene. As and when the user moves, the position of the head and eyes of the user may be considered to render the object in such as way as to provide a perception of immersion to the user. For example, if a 3D image of a car is projected in the virtual environment, the user may walk around the car and according to the user's position, the corresponding images of the car may be rendered. If, for example, the user wants to see the rear of the car, the user may walk around the 3D image of the car as though the car was actually physically present. As the user moves from the front of the car to the rear, the perspective of the user may be considered to render the car in such a way that the user has the perception of walking around an actual physical car.

In order to provide visual feedback to a user when the user interacts with a virtual 3D object, position and depth information of the user may be captured at step 102. The position and spatial depth of a user may be determined using a depth sensor. A depth sensor may include, among other components, an infrared (IR) projector and an IR camera. The IR projector may project a pattern of IR rays at the user and the IR camera may detect the rays reflected off the user. A processor associated with the depth sensor may process the pattern and determine the spatial position and depth of the user. The depth sensor may track the body joint positions and head positions of the user and accordingly determine movement of the user. For example, the depth sensor may determine if the user is approaching objects rendered in the virtual world or moving away from them. Similarly, the depth sensor may be able to determine if the user is reaching out using his hand or is waving etc. The depth sensor may be placed in front of the user and calibrated in such a way as to determine the spatial distance of the user with respect to the depth sensor. The depth sensor may capture an image or a video of the user and determine the distance of the user from the depth sensor from pixel information in the image or video.

Based on the position and depth information of the user, a potential point of interaction between the user and the virtual environment may be determined at step 104. For example, the depth information of the user may be used to determine when a user moves to interact with the virtual environment. The user may interact with the virtual world with various body parts, including, palms, elbows, knees, feet, head, etc. A user's interaction with the virtual environment may include, but is not limited to, reaching out to touch a virtual 3D object, grabbing a virtual object, pushing a virtual object, punching a virtual object, kicking a virtual object, etc.

On determining the potential point of interaction between the user and a 3D virtual object, a spatial depth of the 3D virtual object at the potential point of interaction may be determined using a virtual depth camera at step 106. In some embodiments, the virtual depth camera may be a Computer Graphics (CG) camera. In some embodiments, the virtual depth camera may capture the depth of the virtual object from the perspective of the depth sensor used to capture the position and depth of the user in order to have the same reference point for the depth of the user and the depth of the virtual object. A color depth map may be used to determine the depth of the 3D virtual object. The color depth map may be generated based on an assumption that pixels having similar colors are likely to have similar depths. Thus, a depth function relating a pixel's color to its depth from the reference point may be determined. The virtual depth camera may capture color information of the virtual object at the potential point of interaction and accordingly determine the object's depth. Further, the depth information of the object may help determine which surface of the virtual object is closest to the user. It is to be noted that the depth of the 3D virtual object may be determined in different ways by using different image processing algorithms to process the information captured by the virtual depth camera without deviating from the scope of the present disclosure.

The depth information of the user and the depth information of the virtual object at the potential point of interaction may be maintained as depth information matrices. A user depth information matrix corresponding to the depth information of the user may include pixel level information of the depth of the user. In other words, the user depth information matrix may include, for each pixel of an image captured by the depth sensor, a corresponding depth value. The depth value of a pixel may represent the distance of that pixel from the reference point (position of the depth sensor). Thus, the pixels corresponding to the background (behind the user) may be associated with a larger distance when compared to the pixels associated with the user. Also, not all the pixels of the image of the user may be associated with the same depth. For example, if the user is pointing with the index finger of the right hand, the pixels corresponding to the index finger may have a smaller distance compared to the right hand. The right hand would in turn have a smaller distance compared to the rest of the user's body.

Similarly, a virtual depth information matrix may be maintained for the virtual object associated with the potential point of interaction. The virtual depth information matrix may include a pixel level depth of the various surfaces of the virtual object with respect to a reference point (position of the virtual depth camera).

The user depth information matrix and the virtual depth information matrix may be used to calculate a distance between the user and the virtual object at step 108. The distance between the user and the virtual object may be calculated, per pixel, as the difference between the depth value of the user and the depth value of the object at that pixel. Thus, this provides the distance information between the real-life object and the virtual object at each pixel.

A soft shadow of the user may be rendered on the virtual object based on the distance between the user and the virtual object at step 110. In effect, a soft shadow corresponding to the body part(s) of the user interacting with the virtual environment may be rendered. Here, the soft shadows may be considered to be shadows formed by natural ambient lighting or diffused lighting conditions. They are sharper when objects are in contact and they become soft (defocused) and finally unseen as objects move apart. The user's body may act as an occlusion for natural ambient lighting and accordingly a soft shadow may be rendered on the virtual object that is subject to the interaction.

To render the soft shadow, a predefined color look-up table may be used. The predefined color look-up table may be used to convert the difference in depth information to a black color image with alpha transparency. Thus, the color look-up table may include entries that map a particular distance between the user and the virtual object to a particular shadow having a particular size and shade. Further, a spatially variant blur effect may be applied to the black color image. The radius of the blur may vary according to the distance (difference in depth) at that particular pixel. As the user moves closer to the virtual object, the shadow rendered may be smaller, sharper and darker. Comparatively, as the user moves away from the virtual object, the shadow rendered may be larger, blurrier, and lighter.

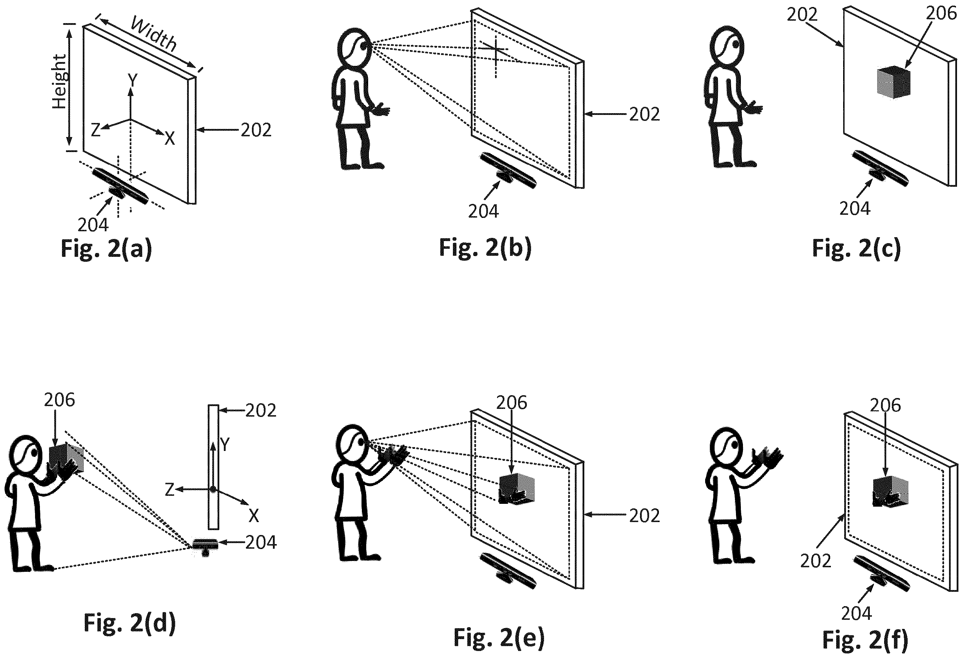

FIG. 2 illustrates an exemplary depiction of a method of providing visual feedback to a user in accordance with some embodiments of the present disclosure. FIG 2(a) illustrates a step of configuring a system for providing visual feedback to a user. The system may include one or more display screens such as display screen 202 and a depth sensor 204. The system may further include one or more projectors (not shown in FIG. 2) that project a scene on the one or more displays. Configuring the system may include fixing the origin of reference coordinate system. Further, the configuration may include establishing a spatial relationship between the display screens (such as display screen 202) and depth sensor 204 by configuring their placement, dimensions and orientations. Thus, the configuration of the system establishes a spatial relationship between all physical and virtual objects.

In FIG. 2(b), the user's head and eye position may be identified by depth sensor 204 and accordingly the user's perspective may be determined. If more than one display screen is present, the user's perspective relative to each of the numerous display screens may be identified. Thereafter, using the user's perspective, the scene may be generated for visualization as shown in FIG. 2(c). It is to be noted that although the scene in FIG. 2(c) depicts a single 3D virtual object 206, a plurality of 3D virtual objects may be rendered on display screen 202.

FIG. 2(d) illustrates the step of determining the depth of the user from depth sensor 204. Based on the depth or distance information of the user relative to depth sensor 204, the potential point of interaction of the user with the scene rendered may be determined. In FIG. 2(d), it may be determined that the user intends to interact with 3D virtual object 206. Further, it may be determined that the user intends to interact with the left and right sides of virtual object 206. Thereafter, a depth map of 3D virtual object 206 may be determined from the perspective of the depth sensor. A virtual depth camera may be used to determine the depth of the 3D virtual object 206. The process of determining the depth of the user and the virtual object is explained in detail in conjunction with FIG. 1. After determining the depths of the user and the virtual object from the perspective of the depth sensor, the difference in the distances between the user and the virtual object may be used to render a soft shadow of the user on the virtual object 206. As the user moves closer to the virtual object 206, the shadow rendered may get smaller, sharper and darker. Comparatively, as the user moves away from the virtual object, the shadow rendered on the virtual object may get larger, blurrier, and lighter. Rendering the soft shadow of the user on the virtual object is depicted in FIG. 2(e) and FIG. 2(f).

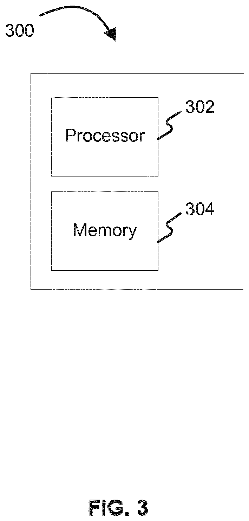

FIG. 3 illustrates a system 300 for providing visual feedback to a user in a virtual reality environment in accordance with some embodiments of the present disclosure. System 300 may include a processor 302 and a memory 304 disposed in communication with the processor 302 and storing processor-executable instructions. The instructions stored in memory 304 may include instructions to receive position and depth information of the user from a depth sensor. The depth sensor may capture at least one of an image and a video of the user and determine depth of the user or distance of the user from the depth sensor based on the pixel color information of the captured image or video. Capturing the position and depth information of the user is explained in detail in conjunction with FIG. 1.

On receiving the depth information of the user, processor 302 may determine a potential interaction point between the user and the virtual reality environment based on the depth information. A user's interaction with the virtual environment may include, but is not limited to, reaching out to touch a virtual 3D object, grabbing a virtual object, pushing a virtual object, punching a virtual object, kicking a virtual object, etc.

The instructions stored in memory 304 may further include instructions to receive depth of the 3D virtual object at the interaction point. A virtual depth camera may determine the depth of the virtual object as explained in conjunction with FIG. 1. Processor 302 may use the depth information of the user and the depth information of the virtual object to calculate a distance between the user and the virtual object. Thereafter, based on the distance between the user and the virtual object, processor 302 may render a soft shadow on the virtual object. In effect, a soft shadow corresponding to the body part(s) of the user interacting with the virtual environment may be rendered. To render the soft shadow, processor 302 may refer a predefined color look-up table. The predefined color look-up table may be used to convert the difference in depth information to a black color image with alpha transparency. Further, a spatially variant blur effect may be applied to the black color image. The radius of the blur may vary according to the distance (difference in depth) at that particular pixel as explained in conjunction with FIG. 1.

### Computer System

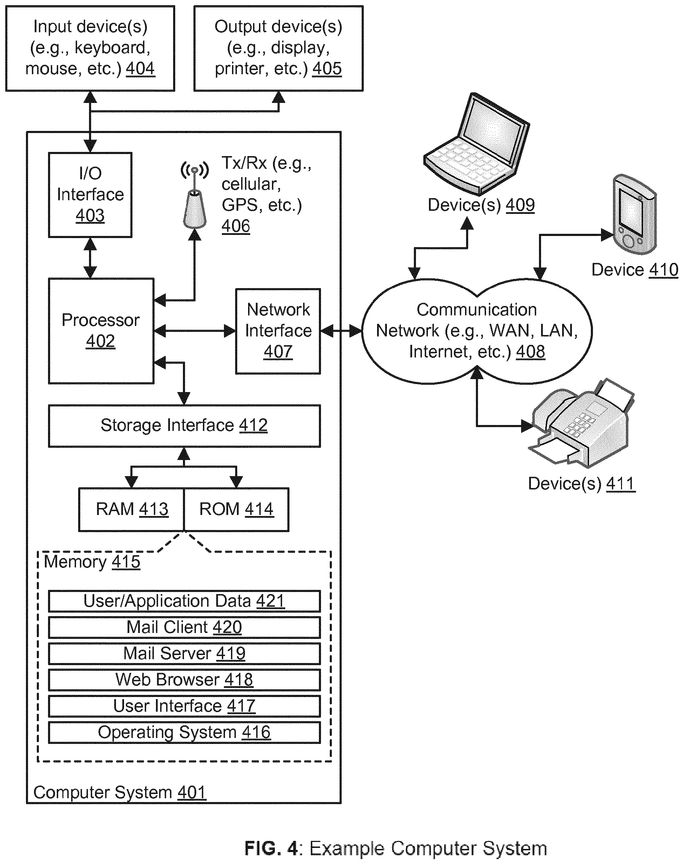

**FIG. 4** is a block diagram of an exemplary computer system for implementing embodiments consistent with the present disclosure. Variations of computer system 401 may be used for implementing system 300. Computer system 401 may comprise a central processing unit ("CPU" or "processor") 402. Processor 402 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 402 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 402 may be disposed in communication with one or more input/output (I/O) devices via I/O interface 403. The I/O interface 403 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 403, the computer system 401 may communicate with one or more I/O devices. For example, the input device 404 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 405 may be a printer, fax machine, video display (e.g., cathode ray tube (CRT), liquid crystal display (LCD), light-emitting diode (LED), plasma, or the like), audio speaker, etc. In some embodiments, a transceiver 406 may be disposed in connection with the processor 402. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 402 may be disposed in communication with a communication network 408 via a network interface 407. The network interface 407 may communicate with the communication network 408. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 408 may include, without limitation, a direct interconnection, local area network (LAN), wide area network (WAN), wireless network (e.g., using Wireless Application Protocol), the Internet, etc. Using the network interface 407 and the communication network 408, the computer system 401 may communicate with devices 410, 411, and 412. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 401 may itself embody one or more of these devices.

In some embodiments, the processor 402 may be disposed in communication with one or more memory devices (e.g., RAM 413, ROM 414, etc.) via a storage interface 412. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magnetooptical drive, optical drive, redundant array of independent discs (RAID), solid-state memory devices, solid-state drives, etc.

The memory devices may store a collection of program or database components, including, without limitation, an operating system 416, user interface application 417, web browser 418, mail server 419, mail client 420, user/application data 421 (e.g., any data variables or data records discussed in this disclosure), etc. The operating system 416 may facilitate resource management and operation of the computer system 401. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 417 may facilitate display, execution, interaction, manipulation, or operation of program components through textual or graphical facilities. For example, user interfaces may provide computer interaction interface elements on a display system operatively connected to the computer system 401, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 401 may implement a web browser 418 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 401 may implement a mail server 419 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 401 may implement a mail client 420 stored program component. The mail client may be a mail viewing application, such as Apple Mail, Microsoft Entourage, Microsoft Outlook, Mozilla Thunderbird, etc.

In some embodiments, computer system 401 may store user/application data 421, such as the data, variables, records, etc. (e.g., user depth information matrix and virtual depth information matrix) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described a method and system for providing visual feedback to a user in a virtual reality environment. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method, executed by a processor, of providing visual feedback to a user in a virtual reality environment, the method comprising:
capturing (102) position and depth information of the user using a depth sensor (204), wherein the method further comprises:
determining (104) a potential interaction point between the user and a 3D virtual object (206) associated with the virtual reality environment based on the position and depth information of the user by determining when the user moves to interact with the virtual reality environment and determining the sides of the 3D virtual object (206) with which the user intends to interact;
determining (106), using a virtual depth camera, a depth of the 3D virtual object (206) at the potential interaction point;
calculating (108) a distance between the user and the 3D virtual object (206) based on the position and depth information of the user and the depth of the 3D virtual object (206) at the potential interaction point; and
rendering (110) a soft shadow of the user on the 3D virtual object (206) based on the calculated distance between the user and the 3D virtual object (206) at the potential interaction point, the soft shadow rendered becoming sharper as the user moves closer to the 3D virtual object (206).

2. The method of claim 1, wherein the position and depth information of the user is determined from at least one of an image and a video captured by the depth sensor (204).

3. The method of claim 1 or claim 2, wherein the position and the depth information of the user comprises at least one of body joints position information and head position information.

4. The method of any of the preceding claims, wherein the soft shadow of the user corresponds to a body part of the user interacting with the virtual reality environment.

5. The method of any of the preceding claims, wherein the soft shadow is rendered by looking-up a predefined color look-up table to convert the distance between the user and the 3D virtual object (206) to a black color image with alpha transparency.

6. The method of claim 5, further comprising applying a spatially variant blur effect to the black color image, wherein the radius of the blur effect is based on the distance between the user and the 3D virtual object (206).

7. A system for providing visual feedback to a user in a virtual reality environment, comprising:
a processor (302); and
a memory (304) disposed in communication with the processor (302) and storing processor-executable instructions, the instructions comprising instructions to:
receive (102) position and depth information of the user from a depth sensor (204), wherein the instructions stored in the memory further comprise instructions to:
determine (104) a potential interaction point between the user and a 3D virtual object (206) associated with the virtual reality environment based on the position and depth information of the user by determining when the user moves to interact with the virtual reality environment and determining the sides of the 3D virtual object (206) with which the user intends to interact;
receive a depth of the 3D virtual object (206) at the potential interaction point from a virtual depth camera;
calculate (108) a distance between the user and the 3D virtual object (206) based on the position and depth information of the user and the depth of the 3D virtual object (206) at the potential interaction point; and
render (110) a soft shadow of the user on the 3D virtual object (206) based on the calculated distance between the user and the 3D virtual object (206) at the potential interaction point, the soft shadow rendered becoming sharper as the user moves closer to the 3D virtual object (206).

8. The system of claim 7, wherein the position and depth information of the user is determined from at least one of an image and a video captured by the depth sensor (204).

9. The system of claim 7 or claim 8, wherein the position and the depth information of the user comprises at least one of body joints position information and head position information.

10. The system of any of claims 7 to 9, wherein the soft shadow of the user corresponds to a body part of the user interacting with the virtual reality environment.

11. The system of any of claims 7 to 10, wherein the instructions comprise instructions to render the soft shadow by looking-up a predefined color look-up table to convert the distance between the user and the 3D virtual object (206) to a black color image with alpha transparency.

12. The system of claim 11, wherein the instructions further comprise instructions to apply a spatially variant blur effect to the black color image, wherein the radius of the blur effect is based on the distance between the user and the 3D virtual object (206).

13. A non-transitory, computer-readable medium storing instructions that, when executed by a processor (302), cause the processor (302) to perform operations for providing visual feedback to a user in a virtual reality environment comprising:
receiving (102) position and depth information of the user from a depth sensor (204), wherein the operations further comprise:
determining (104) a potential interaction point between the user and a 3D virtual object (206) associated with the virtual reality environment based on the position and depth information of the user by determining when the user moves to interact with the virtual reality environment and determining the sides of the 3D virtual object (206) with which the user intends to interact;
receiving (106) a depth of the 3D virtual object (206) at the potential interaction point from a virtual depth camera;
calculating (108) a distance between the user and the 3D virtual object (206) based on the position and depth information of the user and the depth of the 3D virtual object (206) at the potential interaction point; and
rendering (110) a soft shadow of the user on the 3D virtual object (206) based on the calculated distance between the user and the 3D virtual object (206) at the potential interaction point, the soft shadow rendered becoming sharper as the user moves closer to the 3D virtual object (206).

14. The medium of claim 13, wherein:
the position and depth information of the user is determined from at least one of an image and a video captured by the depth sensor; and/or
the position and the depth information of the user comprises at least one of body joints position information and head position information; and/or
the soft shadow of the user corresponds to a body part of the user interacting with the virtual reality environment.

15. The medium of claim 13 or claim 14, wherein the operations comprise rendering the soft shadow by looking-up a predefined color look-up table to convert the distance between the user and the 3D virtual object (206) to a black color image with alpha transparency, and optionally, further comprise applying a spatially variant blur effect to the black color image, wherein the radius of the blur effect is based on the distance between the user and the 3D virtual object (206).

## Patentansprüche

1. Verfahren, ausgeführt durch einen Prozessor, zur Bereitstellung visueller Rückkopplung an einen Nutzer in einer virtuellen Realitätsumgebung, wobei das Verfahren umfasst:
Erfassen (102) von Positions- und Tiefeninformationen des einen Tiefensensor (204) nutzenden Nutzers, wobei das Verfahren ferner umfasst:
Bestimmen (104) eines potenziellen Interaktionspunkts zwischen dem Nutzer und einem der virtuellen Realitätsumgebung zugeordneten virtuellen 3D-Objekt (206) basierend auf den Positions- und Tiefeninformationen des Nutzers durch Bestimmen, wenn sich der Nutzer zur Interaktion mit der virtuellen Realitätsumgebung bewegt, und Bestimmen der Seiten des virtuellen 3D-Objekts (206), mit denen der Nutzer zu interagieren beabsichtigt;
Bestimmen (106), mithilfe einer virtuellen Tiefenkamera, einer Tiefe des virtuellen 3D-Objekts (206) am potenziellen Interaktionspunkt;
Berechnen (108) eines Abstands zwischen dem Nutzer und dem virtuellen 3D-Objekt (206) basierend auf den Positions- und Tiefeninformationen des Nutzers und der Tiefe des virtuellen 3D-Objekts (206) am potenziellen Interaktionspunkt;
und Rendern (110) eines weichen Schattens des Nutzers auf dem virtuellen 3D-Objekt (206) basierend auf dem berechneten Abstand zwischen dem Nutzer und dem virtuellen 3D-Objekt (206) am potenziellen Interaktionspunkt, wobei der gerenderte weiche Schatten schärfer wird, wenn sich der Nutzer näher an das virtuelle 3D-Objekt (206) bewegt.

2. Verfahren nach Anspruch 1, wobei die Positions- und Tiefeninformationen des Nutzers aus mindestens einem eines vom Tiefensensor (204) erfassten Bilds und eines Videos bestimmt wird.

3. Verfahren nach Anspruch 1 oder Anspruch 2, wobei die Positions- und Tiefeninformationen des Nutzers mindestens eines von Körpergelenkpositionsinformationen und Kopfpositionsinformationen umfassen.

4. Verfahren nach einem der vorstehenden Ansprüche, wobei der weiche Schatten des Nutzers einem Körperteil des mit der virtuellen Realitätsumgebung interagierenden Nutzers entspricht.

5. Verfahren nach einem der vorstehenden Ansprüche, wobei der weiche Schatten durch Nachschlagen einer vordefinierten Farbnachschlagetabelle gerendert wird, um den Abstand zwischen dem Nutzer und dem virtuellen 3D-Objekt (206) in ein Schwarzbild mit Alphatransparenz zu konvertieren.

6. Verfahren nach Anspruch 5, ferner umfassend Anwenden eines räumlich veränderlichen Unschärfeeffekts auf das Schwarzbild, wobei der Radius des Unschärfeeffekts auf dem Abstand zwischen dem Nutzer und dem virtuellen 3D-Objekt (206) basiert.

7. System zum Bereitstellen visueller Rückkopplung an einen Nutzer in einer virtuellen Realitätsumgebung, umfassend:
einen Prozessor (302);
und einen in Kommunikation mit dem Prozessor (302) angeordneten Speicher (304), und der vom Prozessor ausführbare Anweisungen speichert, wobei die Anweisungen Anweisungen umfassen, um:
Positions- und Tiefeninformationen des Nutzers von einem Tiefensensor (204) zu empfangen (102), wobei die im Speicher gespeicherten Anweisungen ferner Anweisungen umfassen, um:
einen potenziellen Interaktionspunkt zwischen dem Nutzer und einem der virtuellen Realitätsumgebung zugeordneten virtuellen 3D-Objekt (206) basierend auf den Positions- und Tiefeninformationen des Nutzers durch Bestimmen, wenn sich der Nutzer zur Interaktion mit der virtuellen Realitätsumgebung bewegt, und Bestimmen der Seiten des virtuellen 3D-Objekts (206), mit denen der Nutzer zu interagieren beabsichtigt, zu bestimmen (104);
eine Tiefe des virtuellen 3D-Objekts (206) am potenziellen Interaktionspunkt von einer virtuellen Tiefenkamera zu empfangen;
einen Abstand zwischen dem Nutzer und dem virtuellen 3D-Objekt (206) basierend auf den Positions- und Tiefeninformationen des Nutzers und der Tiefe des virtuellen 3D-Objekts (206) am potenziellen Interaktionspunkt zu berechnen (108);
und einen weichen Schatten des Nutzers auf dem virtuellen 3D-Objekt (206) basierend auf dem berechneten Abstand zwischen dem Nutzer und dem virtuellen 3D-Objekt (206) am potenziellen Interaktionspunkt, wobei der gerenderte weiche Schatten schärfer wird, wenn sich der Nutzer näher an das virtuelle 3D-Objekt (206) bewegt, zu rendern (110).

8. System nach Anspruch 7, wobei die Positions- und Tiefeninformationen des Nutzers aus mindestens einem eines vom Tiefensensor (204) erfassten Bilds und eines Videos bestimmt wird.

9. System nach Anspruch 7 oder Anspruch 8, wobei die Positions- und Tiefeninformationen des Nutzers mindestens eines von Körpergelenkpositionsinformationen und Kopfpositionsinformationen umfasst.

10. System nach einem Ansprüche 7 bis 9, wobei der weiche Schatten des Nutzers einem Körperteil des mit der virtuellen Realitätsumgebung interagierenden Nutzers entspricht.

11. System nach einem der Ansprüche 7 bis 10, wobei die Anweisungen Anweisungen umfassen, um den weichen Schatten durch Nachschlagen einer vordefinierten Farbnachschlagetabelle zu rendern, um den Abstand zwischen dem Nutzer und dem virtuellen 3D-Objekt (206) in ein Schwarzbild mit Alphatransparenz zu konvertieren.

12. System nach Anspruch 11, wobei die Anweisungen ferner Anweisungen umfassen, um einen räumlich veränderlichen Unschärfeeffekt auf das Schwarzbild anzuwenden, wobei der Radius des Unschärfeeffekts auf dem Abstand zwischen dem Nutzer und dem virtuellen 3D-Objekt (206) basiert.

13. Nicht-transitorisches, computerlesbares Medium, das Anweisungen speichert, die bei Ausführung durch einen Prozessor (302) den Prozessor (302) veranlassen, Operationen zum Bereitstellen visueller Rückkopplung an einen Nutzer in einer virtuellen Realitätsumgebung auszuführen, umfassend:
Empfangen (102) von Positions- und Tiefeninformationen des Nutzers von einem Tiefensensor (204), wobei die Operationen ferner umfassen:
Bestimmen (104) eines potenziellen Interaktionspunkts zwischen dem Nutzer und einem der virtuellen Realitätsumgebung zugeordneten virtuellen 3D-Objekt (206) basierend auf den Positions- und Tiefeninformationen des Nutzers durch Bestimmen, wenn sich der Nutzer zur Interaktion mit der virtuellen Realitätsumgebung bewegt, und Bestimmen der Seiten des virtuellen 3D-Objekts (206), mit denen der Nutzer zu interagieren beabsichtigt;
Empfangen (106) einer Tiefe des virtuellen 3D-Objekts (206) am potenziellen Interaktionspunkt von einer virtuellen Tiefenkamera;
Berechnen (108) eines Abstands zwischen dem Nutzer und dem virtuellen 3D-Objekt (206) basierend auf den Positions- und Tiefeninformationen des Nutzers und der Tiefe des virtuellen 3D-Objekts (206) am potenziellen Interaktionspunkt;
und Rendern (110) eines weichen Schattens des Nutzers auf dem virtuellen 3D-Objekt (206) basierend auf dem berechneten Abstand zwischen dem Nutzer und dem virtuellen 3D-Objekt (206) am potenziellen Interaktionspunkt, wobei der gerenderte weiche Schatten schärfer wird, wenn sich der Nutzer näher an das virtuelle 3D-Objekt (206) bewegt.

14. Medium nach Anspruch 13, wobei:
die Positions- und Tiefeninformationen des Nutzers aus mindestens einem eines vom Tiefensensor erfassten Bilds und eines Videos bestimmt wird;
und/oder die Positions- und Tiefeninformationen des Nutzers mindestens eines von Körpergelenkpositionsinformationen und Kopfpositionsinformationen umfassen; und/oder der weiche Schatten des Nutzers einem Körperteil des mit der virtuellen Realitätsumgebung interagierenden Nutzers entspricht.

15. Medium nach Anspruch 13 oder Anspruch 14, wobei die Operationen das Rendern des weichen Schattens durch Nachschlagen einer vordefinierten Farbnachschlagetabelle umfasst, um den Abstand zwischen dem Nutzer und dem virtuellen 3D-Objekt (206) in ein Schwarzbild mit Alphatransparenz zu konvertieren; und optional ferner das Anwenden eines räumlich veränderlichen Unschärfeeffekts auf das Schwarzbild umfasst, wobei der Radius des Unschärfeeffekts auf dem Abstand zwischen dem Nutzer und dem virtuellen 3D-Objekt (206) basiert.

## Revendications

1. Procédé, exécuté par un processeur, permettant de fournir une rétroaction visuelle à un utilisateur dans un environnement de réalité virtuelle, ledit procédé comprenant :
la capture (102) des informations de position et de profondeur de l'utilisateur à l'aide d'un capteur de profondeur (204), ledit procédé comprenant en outre :
la détermination (104) d'un point d'interaction potentiel entre l'utilisateur et un objet virtuel 3D (206) associé à l'environnement de réalité virtuelle sur la base des informations de position et de profondeur de l'utilisateur en déterminant le moment où l'utilisateur se déplace pour interagir avec l'environnement de réalité virtuelle et en déterminant les côtés de l'objet virtuel 3D (206) avec lesquels l'utilisateur a l'intention d'interagir ;
la détermination (106) à l'aide d'une caméra de profondeur virtuelle, d'une profondeur de l'objet virtuel 3D (206) au niveau du point d'interaction potentiel ;
le calcul (108) d'une distance entre l'utilisateur et l'objet virtuel 3D (206) sur la base des informations de position et de profondeur de l'utilisateur et de la profondeur de l'objet virtuel 3D (206) au niveau du point d'interaction potentiel ;
et la réalisation du rendu (110) d'une ombre douce de l'utilisateur sur l'objet virtuel 3D (206) sur la base de la distance calculée entre l'utilisateur et l'objet virtuel 3D (206) au niveau du point d'interaction potentiel, le rendu d'ombre douce devenant plus net à mesure que l'utilisateur se rapproche de l'objet virtuel 3D (206).

2. Procédé selon la revendication 1, lesdites informations de position et de profondeur de l'utilisateur étant déterminées à partir d'au moins l'une d'une image et d'une vidéo capturée par le capteur de profondeur (204).

3. Procédé selon la revendication 1 ou 2, lesdites informations de position et de profondeur de l'utilisateur comprenant au moins l'une des informations de position des articulations du corps et des informations de position de la tête.

4. Procédé selon l'une quelconque des revendications précédentes, ladite ombre douce de l'utilisateur correspondant à une partie corporelle de l'utilisateur interagissant avec l'environnement de réalité virtuelle.

5. Procédé selon l'une quelconque des revendications précédentes, ladite ombre douce étant rendue en recherchant une table de correspondance de couleurs prédéfinie pour convertir la distance entre l'utilisateur et l'objet virtuel 3D (206) en une image de couleur noire avec transparence alpha.

6. Procédé selon la revendication 5, comprenant en outre l'application d'un effet de flou variant spatialement à l'image de couleur noire, ledit rayon de l'effet de flou étant basé sur la distance entre l'utilisateur et l'objet virtuel 3D (206).

7. Système destiné à fournir une rétroaction visuelle à un utilisateur dans un environnement de réalité virtuelle, comprenant :
un processeur (302) ;
et une mémoire (304) en communication avec le processeur (302) et stockant des instructions exécutables par le processeur, les instructions comprenant des instructions pour :
recevoir (102) des informations de position et de profondeur de l'utilisateur provenant d'un capteur de profondeur (204), lesdites instructions stockées dans la mémoire comprenant en outre des instructions pour :
déterminer (104) un point d'interaction potentiel entre l'utilisateur et un objet virtuel 3D (206) associé à l'environnement de réalité virtuelle sur la base des informations de position et de profondeur de l'utilisateur en déterminant le moment où l'utilisateur se déplace pour interagir avec l'environnement de réalité virtuelle et en déterminant les côtés de l'objet virtuel 3D (206) avec lesquels l'utilisateur a l'intention d'interagir ;
recevoir une profondeur de l'objet virtuel 3D (206) au niveau du point d'interaction potentiel provenant d'une caméra de profondeur virtuelle ;
calculer (108) une distance entre l'utilisateur et l'objet virtuel 3D (206) sur la base des informations de position et de profondeur de l'utilisateur et de la profondeur de l'objet virtuel 3D (206) au niveau du point d'interaction potentiel ;
et réaliser le rendu (110) d'une ombre douce de l'utilisateur sur l'objet virtuel 3D (206) sur la base de la distance calculée entre l'utilisateur et l'objet virtuel 3D (206) au niveau du point d'interaction potentiel, le rendu d'ombre douce devenant plus net à mesure que l'utilisateur se rapproche de l'objet virtuel 3D (206).

8. Système selon la revendication 7, lesdites informations de position et de profondeur de l'utilisateur étant déterminées à partir d'au moins l'une d'une image et d'une vidéo capturée par le capteur de profondeur (204).

9. Système selon la revendication 7 ou 8, lesdites informations de position et de profondeur de l'utilisateur comprenant au moins l'une des informations de position des articulations du corps et des informations de position de la tête.

10. Système selon l'une quelconque des revendications 7 à 9, ladite ombre douce de l'utilisateur correspondant à une partie corporelle de l'utilisateur interagissant avec l'environnement de réalité virtuelle.

11. Système selon l'une quelconque des revendications 7 à 10, lesdites instructions comprenant des instructions pour réaliser le rendu de l'ombre douce en recherchant une table de correspondance de couleurs prédéfinie afin de convertir la distance entre l'utilisateur et l'objet virtuel 3D (206) en une image de couleur noire avec transparence alpha.

12. Système selon la revendication 11, lesdites instructions comprenant en outre des instructions pour appliquer un effet de flou variant spatialement à l'image de couleur noire, ledit rayon de l'effet de flou étant basé sur la distance entre l'utilisateur et l'objet virtuel 3D (206).

13. Support lisible par ordinateur, non transitoire stockant des instructions qui, lorsqu'elles sont exécutées par un processeur (302), amènent le processeur (302) à effectuer des opérations pour fournir une rétroaction visuelle à un utilisateur dans un environnement de réalité virtuelle comprenant :
la réception (102) des informations de position et de profondeur de l'utilisateur provenant d'un capteur de profondeur (204), lesdites opérations comprenant en outre :
la détermination (104) d'un point d'interaction potentiel entre l'utilisateur et un objet virtuel 3D (206) associé à l'environnement de réalité virtuelle sur la base des informations de position et de profondeur de l'utilisateur en déterminant le moment où l'utilisateur se déplace pour interagir avec l'environnement de réalité virtuelle et en déterminant les côtés de l'objet virtuel 3D (206) avec lesquels l'utilisateur a l'intention d'interagir ;
la réception (106) d'une profondeur de l'objet virtuel 3D (206) au point d'interaction potentiel provenant d'une caméra de profondeur virtuelle ;
le calcul (108) d'une distance entre l'utilisateur et l'objet virtuel 3D (206) sur la base des informations de position et de profondeur de l'utilisateur et de la profondeur de l'objet virtuel 3D (206) au niveau du point d'interaction potentiel ;
et la réalisation du rendu (110) d'une ombre douce de l'utilisateur sur l'objet virtuel 3D (206) sur la base de la distance calculée entre l'utilisateur et l'objet virtuel 3D (206) au niveau du point d'interaction potentiel, ledit rendu d'ombre douce devenant plus net à mesure que l'utilisateur se rapproche de l'objet virtuel 3D (206).

14. Support selon la revendication 13,
lesdites informations de position et de profondeur de l'utilisateur étant déterminées à partir d'au moins l'une d'une image et d'une vidéo capturée par le capteur de profondeur ;
et/ou lesdites informations de position et de profondeur de l'utilisateur comprenant au moins l'une des informations de position des articulations du corps et des informations de position de la tête ; et/ou l'ombre douce de l'utilisateur correspondant à une partie corporelle de l'utilisateur interagissant avec l'environnement de réalité virtuelle.

15. Support selon la revendication 13 ou 14, lesdites opérations comprenant le rendu de l'ombre douce en recherchant une table de correspondance de couleurs prédéfinie pour convertir la distance entre l'utilisateur et l'objet virtuel 3D (206) en une image de couleur noire avec alpha transparence, et éventuellement, comprenant en outre l'application d'un effet de flou variant spatialement à l'image de couleur noire, ledit rayon de l'effet de flou étant basé sur la distance entre l'utilisateur et l'objet virtuel 3D (206).
